(19) Europäisches Patentamt
European Patent Office
Office européen des brevets

(11) **EP 3 711 013 B1**

(12) **FASCICULE DE BREVET EUROPEEN**

(45) Date de publication et mention
de la délivrance du brevet:
**15.04.2026 Bulletin 2026/16**

(21) Numéro de dépôt: **18796480.4**

(22) Date de dépôt: **08.11.2018**

(51) Classification Internationale des Brevets (IPC):
**G06Q 50/10** (2012.01) **G06Q 10/00** (2026.01)

(52) Classification Coopérative des Brevets (CPC):
**G06Q 50/10; G06Q 10/00**

(86) Numéro de dépôt international:
**PCT/EP2018/080682**

(87) Numéro de publication internationale:
**WO 2019/092146 (16.05.2019 Gazette 2019/20)**

(54) **DISPOSITIF ET PROCÉDÉ DE TRAITEMENT DE DONNÉES HÉTÉROGÈNES POUR DÉTERMINER DES AFFLUENCES SPATIO-TEMPORELLES**

VORRICHTUNG UND VERFAHREN ZUR VERARBEITUNG VON HETEROGENEN DATEN ZUR BESTIMMUNG VON EINSTRÖMUNGEN IN ZEIT UND RAUM

DEVICE AND METHOD FOR PROCESSING HETEROGENEOUS DATA TO DETERMINE INFLOWS IN TIME AND SPACE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.11.2017 FR 1760653**

(43) Date de publication de la demande:
**23.09.2020 Bulletin 2020/39**

(73) Titulaire: **SUEZ International**
**92800 Puteaux (FR)**

(72) Inventeurs:
• **LECLERC, Cyril**
**33110 Le Bouscat (FR)**
• **CASAGRANDA, Claire**
**33400 Talence (FR)**

(74) Mandataire: **Lavoix**
**2, place d'Estienne d'Orves**
**75441 Paris Cedex 09 (FR)**

(56) Documents cités:
**EP-A1- 3 070 665      WO-A1-2005/083602**
**WO-A1-2017/103069      US-A1- 2015 308 856**

**EP 3 711 013 B1**

## Description

### Domaine de l'invention

L'invention concerne le domaine technique du traitement de données, en particulier le traitement de données hétérogènes afin de fournir à des échelles spatio-temporelles fines des estimations et des prévisions de fréquentation.

### Etat de la Technique

La connaissance affinée de la fréquentation constitue un levier d'accompagnement des collectivités touristiques vers une gestion optimisée de leurs ressources et services en fonction des territoires. Les collectivités locales peuvent être soumises à des contraintes démographiques fortes qui les obligent à devoir gérer et optimiser l'attractivité de leur ville. Aussi, il est devenu un enjeu majeur de pouvoir mesurer une fréquentation à des échelles fines qu'elles soient spatiales et temporelles, et pour différents types de clients. Or, la mesure de la fréquentation réelle d'un territoire touristique reste difficile à réaliser à des échelles spatio-temporelles fines. Elle doit être appréhendée par des méthodes mettant en jeu des données précises et en lien direct avec la population présente à un instant donné sur une zone donnée d'un territoire. Aussi, l'acquisition, le traitement et l'analyse de données étroitement liées à la fréquentation sont des étapes nécessaires à toute estimation d'indicateurs de mesure de la fréquentation.

Différentes méthodes d'évaluation quantitative de la fréquentation existent et elles reposent principalement sur les approches suivantes :

- la méthode des flux qui est fondée sur l'agrégation des données de différents transporteurs ou points d'accès (gare, aéroport, axes routiers). Cette méthode qui est pertinente sur un périmètre « fermé » ou avec une saisonnalité touristique très marquée (en montagne ou sur certains littoraux par exemple), nécessite de nouer de nombreux accords, indispensables pour récupérer ces données. Elle peut difficilement s'adapter au contexte de tourisme urbain ayant un territoire très ouvert avec beaucoup de passages, et qui nécessite de disposer ou déployer d'un dispositif de comptage trop conséquent. Elle rend donc difficile l'estimation dynamique d'une population à des échelles spatiales fines, infra communale comme par exemple le quartier.
- l'analyse des données de téléphonie mobile, comme le produit « Flux Vision Tourisme » de la société Orange, qui permet d'estimer les flux touristiques sur la base des traces anonymisées issues du réseau mobile. Cette méthode, qui s'appuie sur la géolocalisation quasiment en temps réel des abonnés d'un opérateur de téléphonie mobile équipés d'un GPS, permet d'obtenir une représentation complète, par redressement à partir des parts de marché de l'opérateur, des flux de population dans une zone donnée ou trans-territoires. Si cette méthode permet de quantifier les flux touristiques à des échelles spatio-temporelles fines et des informations détaillées sur les caractéristiques des personnes présentes, elle ne permet pas de fournir une vision précise à un instant donné d'indicateurs agrégés de mesure des taux d'occupation de logements spécifiques révélateurs de la fréquentation touristique du territoire étudié.
- l'usage de données métier couplées dans certains cas avec des enquêtes terrain. L'utilisation de données issues des métiers de l'eau (consommation d'eau, traitement des eaux usées) et/ou des déchets (ordures ménagères) par exemple, couplées avec des ratios nationaux et des enquêtes terrain auprès des hébergeurs (souvent longues et réalisées ponctuellement), peuvent donner de manière rétrospective une image de la population présente par le passé sur un territoire donné. Ces méthodes manuelles nécessitent d'être actualisées et ne permettent pas une évaluation dynamique de la fréquentation touristique d'un territoire. Par ailleurs, s'appuyant sur des données macro, leur précision reste à démontrer.

Dans la littérature brevet, les publications suivantes illustrent des méthodes pour estimer des flux de population sur la base des traces issues du réseau mobile ou via l'analyse d'images ou encore de données issues de capteurs. Elles portent principalement sur des méthodes d'estimation des flux de population, le plus souvent touristique, à des échelles géographiques variables et sur des systèmes d'information associés :

- "Information processing system, population flow estimation device, program, information processing method, and population flow estimation method" (WO2015072357) ;
- "Information system to adapt a geographic zone to interests of the population, uses identification of mobile telephone caller to access database containing the callers profile, which is then associated with the geographic zone" (FR2827689) ;
- "Method for estimating tourists in scenic spot based on mobile communication technology" (CN103020732) ;
- "Resident and tourist determining method for e.g. tourist spot, involves counting number of residents and tourists having used cellular telephones at-least once in geographical zone during preset time period, using main residence areas" (EP1723591) ;
- "Method and system for population flow statistics" (EP2535843) ;
- "Use of the occupancy rate of areas or buildings to simulate the flow of persons" (EP2766695).

Par ailleurs, plusieurs outils de gestion prévisionnelle de l'affluence dans divers secteurs d'activité (grande distribution, transport public, culture, tourisme, etc.) sont connus. Ils reposent sur des algorithmes mathématiques ou des modèles prédictifs, élaborés à partir de données réelles mesurées dans le secteur d'intérêt et de données ouvertes dans certains cas. Il est possible de citer :

- Le logiciel « Affluencia » distribué par Vekia qui fait de l'anticipation en temps réel de l'affluence en magasin. Il repose sur une analyse mêlant une étude pointue des comportements et l'application d'une loi mathématique des grands nombres. Ce logiciel permet de gérer le planning des hôtesses de caisse dans les hypers et supermarchés ;
- L'application « Tranquilien » issue d'un partenariat entre la SNCF et la société Snips qui permet d'estimer l'affluence dans les prochains trains à partir de données de la SNCF croisées avec des données ouvertes et les contributions des voyageurs qui remontent en temps réel des informations sur l'affluence qu'ils constatent lorsqu'ils montent dans un train ;
- L'application « Affluences » qui estime le taux d'occupation et le temps d'attente des bibliothèques en temps réel et prévisionnels sur la journée. La méthode repose sur la mesure de l'affluence à partir de capteurs posés dans les établissements partenaires et l'analyse de ces données grâce à un algorithme d'analyse prédictive. L'usage de capteurs nécessite une instrumentation préalable des lieux sur lequel le comptage doit être réalisé, ce qui a pour conséquence de limiter la solution à des zones restreintes.

Certains travaux de recherche se basent uniquement sur l'analyse d'un signal wifi afin de compter en temps réel les personnes présentes dans une certaine zone en modélisant les variations des ondes des spots wifi. La technologie wifi utilisée pour estimer le nombre d'individus dans une zone donnée présente l'avantage de prendre en compte les individus sans Smartphone mais présente l'inconvénient inhérent au wifi qui est qu'elle ne peut s'étendre sur des surfaces très larges.

Ainsi, selon les données utilisées par les solutions de l'art antérieur pour estimer la fréquentation, il ressort deux inconvénients principaux qui sont (1) la capacité à estimer la fréquentation de manière dynamique à des échelles spatiales variables, allant par exemple d'un bâtiment à une ville, et (2) la précision des estimateurs de la fréquentation.

Par ailleurs, l'absence dans certaines solutions d'outil de visualisation des indicateurs de fréquentation relève également d'un inconvénient pour le client final, pour qui l'analyse des résultats n'est alors pas facilitée, voire pas possible.

Aussi, bien qu'intéressantes, les limites de ces approches connues ne permettent pas de satisfaire pleinement les besoins évoqués précédemment.

Il existe alors le besoin d'un dispositif et d'un procédé pour fournir de manière dynamique en se basant sur des indicateurs de mesure précis, des estimations et des prévisions de fréquentation sur une zone géographique, à des échelles spatiales et temporelles fines.

**Résumé de l'invention**

Un objet de la présente invention concerne un procédé mis en œuvre par ordinateur et un dispositif comprenant des moyens permettant de fournir de manière dynamique des estimations et des prévisions d'une fréquentation spatio-temporelle.

La présente invention vise à pallier les limites des techniques connues en proposant un procédé et un dispositif qui croise des données hétérogènes, i.e. des données métiers avec des données ouvertes et des données privées, afin de créer des indicateurs de mesure précis qui permettent de calculer des estimations et de fournir des prévisions d'une fréquentation, à des échelles spatiales et temporelles fines.

L'invention trouvera des applications avantageuses dans les domaines où il y a lieu d'estimer et de prévoir une fréquentation. Le principe général de l'invention consiste à récupérer des données métiers et à différentes étapes du procédé de les croiser avec des données externes - données ouvertes dites Open Data et/ou données privées - afin de générer différents indicateurs de mesure de la fréquentation, à des échelles spatio-temporelles fines, et pour différents profils de clients constituant une fréquentation.

Bien qu'une application préférentielle de l'invention concerne la fréquentation touristique et s'appuie sur l'utilisation des données métiers de la consommation en eau et/ou en énergie, d'autres applications sont envisageables dès lors qu'une ressource consommée peut être mesurée et traduite en volume. Ainsi, les données métiers peuvent couvrir également des données de volumes distribués sur des réseaux d'eau potable ou des réseaux de station d'épuration des eaux usées (STEP), ou encore des tonnages de déchets. Dans des modes de réalisation particuliers, l'invention peut s'appliquer à la gestion des déchets. Les données métiers couvrent alors les données de volume de déchets produit par usager, volume qui peut être mesuré ou au moins estimé, e.g. par « poubelle connectée », par analyse et reconnaissance d'images ou de vidéos, par mesure du taux de remplissage de poubelle et télérelève de cette donnée, etc). Une consommation en eau sera par exemple mesurée en m$^3$/an, une consommation électrique en kW/h, une consommation de gaz en m$^3$/an et une production de déchets en m$^3$/an.

Par extension, l'invention s'applique plus généralement au secteur des « utilities » qui désigne les services fournis aux collectivités, comme la production et la distribution de l'eau, du gaz et de l'électricité par exemple.

Un autre objet de la présente invention est de proposer une interface de restitution des résultats générés par le procédé de l'invention. L'interface est configurée pour visualiser et suivre en temps réel les différents indicateurs de mesure sous une présentation adaptée à un utilisateur final, tel une collectivité touristique. Une collectivité peut ainsi adapter en temps réel les ressources et services sur son territoire et mettre en place les mesures adaptées pour répondre aux enjeux qui sont directement interprétés des résultats fournis par le procédé de l'invention.

Avantageusement, le procédé selon l'invention qui permet le croisement de données métiers avec des données externes apporte à l'utilisateur une meilleure compréhension des phénomènes de fréquentation. En particulier, le croisement des données de consommation télérelevées, avec des données externes de nature touristique socio-économique, permet d'obtenir des indicateurs de mesure de fréquentation précis, à partir desquels l'utilisateur (collectivité locale par exemple) pourra adapter de manière plus efficiente l'ensemble des ressources qui correspondra à l'estimation fournie sur la fréquentation. Les données dites socio-économiques peuvent être des agrégations, des statistiques de données (par exemple agrégation de données de recensement de logements, de restaurants), des données reçues via des enquêtes.

Avantageusement, l'invention fait usage de l'enrichissement de données de consommation avec des données ouvertes pour établir un profilage de fréquentation. En particulier, sur les zones touristiques où le télérelevé des consommations est généralisé, le taux d'occupation de chaque type de logement peut être déterminé précisément. Le procédé de l'invention permet de fournir des indicateurs de mesure très précis de taux d'occupation de logements professionnels (hébergements touristiques vs restaurants) et domestiques (vacants vs résidences secondaires vs permanents), basés sur la consommation d'une ressource et une analyse croisée de données hétérogènes (métier, ouvertes et privées). Par extension, le procédé permet de créer un modèle prédictif de la fréquentation touristique qui peut être exploité par l'utilisateur, en vue d'anticiper des décisions et d'optimiser sur un territoire, l'organisation des infrastructures, des services aux usagers, de la communication, des ressources des commerçants, des tournées de ramassage des déchets, par exemple.

Avantageusement, le modèle prédictif peut être exploité pour la gestion automatique de matériaux, de personnes ou d'activités, dans tous services susceptibles d'avoir un impact sur la population touristique. Un exemple concret d'une application de l'invention est la gestion automatique d'établissements hôteliers. Les indicateurs de mesure générés par la mise en œuvre du procédé de l'invention peuvent être utilisés avec le modèle prédictif afin d'anticiper une charge de travail à venir, et permettre de moduler la gestion de plusieurs ressources, comme :

- du personnel : des plannings peuvent être générés automatiquement par le procédé en fonction de l'affluence touristique prévue, permettant une meilleure maîtrise du temps de travail ;
- du stock : l'anticipation de la demande amène une meilleure gestion des stocks et des commandes tout en minimisant les pertes suite aux invendus. Ainsi le procédé pourrait générer une variation de commande des produits de stock de façon automatique en fonction du taux d'occupation déterminé par le procédé ;
- des tarifs : l'anticipation des périodes pleines et creuses d'un hôtel permet une meilleure maîtrise des prix à appliquer et ainsi du chiffre d'affaire de l'hôtel. Ainsi le procédé pourrait générer une variation du prix appliqué de façon automatique en fonction du taux d'occupation déterminé par le procédé.

La génération d'indicateurs de mesure précis et d'un modèle prédictif peut également trouver avantage à être exploité pour d'autres types d'hébergements touristiques ou établissements accueillants du public. Ainsi, de nombreux cas d'application de l'invention sont possibles, notamment dans la gestion des services à la collectivité : gestion automatique des tournées de ramassage des déchets, des transports en commun, des travaux aux voiries, pour ne citer que quelques exemples.

Pour obtenir les résultats recherchés, il est proposé un procédé mis en œuvre par ordinateur permettant de déterminer des taux d'occupation spatio-temporels. Le procédé comprend des étapes consistant à :

- recevoir depuis une pluralité de compteurs communicants des données métier brutes représentatives de la consommation d'une ressource ;
- transformer pour chaque compteur communicant, les données métier brutes en volumes journaliers de consommation de ladite ressource;
- combiner les volumes journaliers de consommation avec des données additionnelles d'identification d'usagers pour générer des catégories d'usagers de ladite ressource ;

- pour chaque catégorie d'usagers, générer un profil d'usager pour chaque usager, le profil d'usager comprenant au moins une information sur le type d'activité de l'usager ou sur le statut d'habitation de l'usager ;
- sélectionner des profils d'usager ayant un même type d'activité et/ou des profils d'usager ayant un même statut d'habitation ;
- calculer un taux d'occupation journalier pour l'ensemble des profils d'usager sélectionnés ayant un même type d'activité, et un taux d'occupation journalier pour l'ensemble des profils d'usager sélectionnés ayant un même statut d'habitation ; et
- calculer à partir des taux d'occupation journaliers, un taux d'occupation moyen sur une zone donnée et pour une période donnée.

Selon des modes de réalisation :

- les données métier brutes comprennent des index de consommation horodatée et l'étape de transformer pour chaque compteur communicant, les données métier brutes en volumes journaliers de consommation consiste au moins à appliquer des filtres pour exclure certaines données, à recaler les index à heure fixe, et à agréger les données ;
- les données additionnelles d'identification d'usagers comprennent des données sur les usagers des compteurs en télérelève et des données externes privées et/ou des données ouvertes, et dans lequel les catégories d'usagers générées comprennent au moins une catégorie d'usagers professionnels et une catégorie d'usagers domestiques ;
- le type d'activité de l'usager définit notamment une activité d'hébergement touristique ou une activité de restauration, et le statut d'habitation de l'usager définit notamment une résidence principale ou une résidence secondaire ou un logement vacant ;

- l'étape de calculer un taux d'occupation journalier consiste à calculer un taux d'occupation journalier pour les hébergements touristiques et un taux d'occupation journalier pour les résidences secondaires ;
- l'étape du calcul du taux d'occupation moyen pour les hébergements touristiques prend en compte la consommation maximale de la ressource correspondant à un pic de fréquentation pour l'ensemble des hébergements touristiques, la capacité d'hébergements de chaque hébergement, et le volume journalier consommé de chaque hébergement ;
- l'étape du calcul du taux d'occupation moyen pour les résidences secondaires prend en compte un nombre de résidences secondaires sur une zone donnée et un nombre de jours d'occupation de ces résidences secondaires sur une période donnée ;
- le procédé comprend de plus une étape pour créer un modèle de l'affluence, à partir de données externes liées à la fréquentation touristique, et des taux d'occupation des résidences secondaires et des hébergements touristiques ;
- le modèle de l'affluence est un modèle de type ARMAX ;
- le modèle de l'affluence est mis en œuvre pour générer des prédictions de la variation d'affluence ;
- le procédé comprend de plus une étape pour afficher les résultats des calculs sur au moins un écran de visualisation ;
- la ressource consommée est de l'eau ou de l'électricité.

L'invention a aussi pour objet un dispositif permettant de déterminer des taux d'occupation spatio-temporels, le dispositif comprenant des moyens pour mettre en œuvre les étapes du procédé revendiqué.

Dans un mode de réalisation, les moyens comprennent une interface utilisateur de dialogue, configurée pour définir des échelles spatio-temporelles pour lesquelles calculer des taux d'occupation et pour faire de l'analyse et du suivi de prédictions d'affluence.

L'invention a aussi pour objet un produit programme d'ordinateur comprenant un programme, ledit programme comprenant des instructions de code permettant d'effectuer les étapes du procédé revendiqué, lorsque le programme est exécuté sur un ordinateur.

## Description des figures

D'autres caractéristiques et avantages de l'invention apparaîtront à l'aide de la description qui suit et des figures des dessins annexés dans lesquels :

La figure 1 illustre un exemple d'implémentation du dispositif de l'invention pour traiter des données hétérogènes et déterminer une fréquentation ;

La figure 2 montre un enchaînement d'étapes du procédé de l'invention pour traiter des données hétérogènes et déterminer une fréquentation selon un mode de réalisation ;

La figure 3 illustre un enchaînement d'étapes pour calculer des consommations journalières par usager selon un mode de réalisation;

La figure 4 montre un exemple d'implémentation des étapes pour calculer des consommations journalières par usager sous forme de tables d'index;

La figure 5 montre un exemple d'implémentation des étapes pour calculer des taux d'occupation sous forme de tables d'index ;

La figure 6 illustre un exemple de taux d'occupation moyen sur une période et une maille spatiale données ;

La figure 7 illustre un exemple de taux d'occupation moyen sur une période donnée pour des types d'hébergements donnés ;

La figure 8 illustre l'influence de différents paramètres sur la fréquentation ; et

La figure 9 illustre la comparaison de prédictions de variation d'affluence dans le temps.

## Description détaillée de l'invention

D'une manière générale, le principe de l'invention consiste à exploiter des données de nature et d'origine différentes afin de construire à des échelles spatio-temporelles fines, des indicateurs de mesure précis pour estimer et prédire des fréquentations. Le croisement tel que proposé par l'invention, de données spécifiques à un métier avec des données ouvertes publiques et/ou privées, permet de générer une information à caractère performatif.

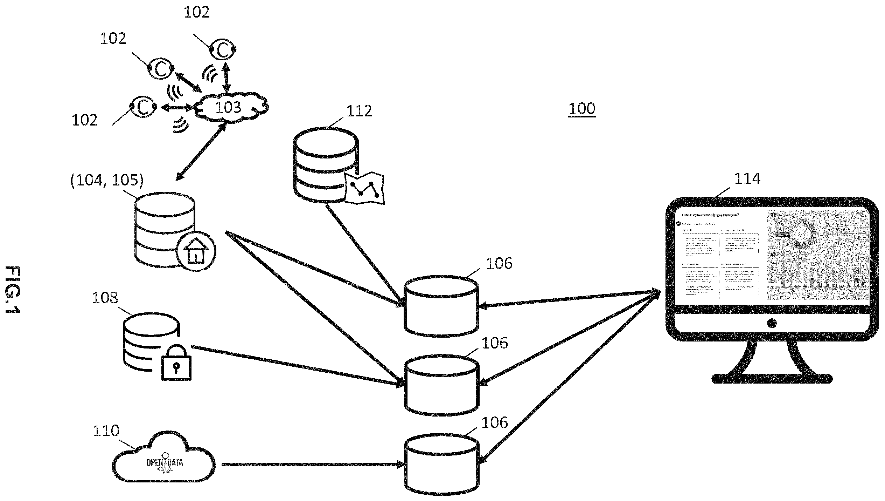

La figure 1 illustre un exemple d'implémentation du dispositif (100) de l'invention pour traiter des données hétérogènes et déterminer une fréquentation. L'homme du métier pourra considérer que les figures sont simplifiées pour permettre une bonne compréhension des principes de l'invention, mais ne limitent pas l'invention à ces seuls exemples. L'invention peut être implémentée et opérée selon les mêmes principes dans différents environnements et en particulier pour différentes données.

L'exemple décrit s'appuie sur l'utilisation de données du métier de la consommation de l'eau par des usagers ou consommateurs. Un usager qui consomme une ressource donnée (eau, électricité, gaz, déchets...) peut être une ou plusieurs personnes physiques ou une personne morale (e.g. une société ou une administration comme un hôpital). La consommation de la ressource est obtenue par la télé-relève à distance d'un compteur (102), i.e. sans avoir besoin d'accéder physiquement au compteur, via différentes technologies. Le compteur est alors dit "communicant" ou "intelligent" ("Smart meter" en anglais).

Il est décrit un système comprenant une pluralité de compteurs communicants pour mettre en œuvre une ou plusieurs des étapes du procédé. Un compteur communicant est un appareil domotique effectuant une ou plusieurs télémesures d'une ressource (eau et/ou énergie). C'est un objet connecté qui généralement est fixe, i.e. adossé à une source d'alimentation en eau et/ou gaz et/ou électricité. Certains compteurs peuvent être amovibles. Dans un mode de réalisation, un compteur communicant peut comprendre un module de communication, comme par exemple un émetteur radio ou un émetteur d'impulsions (sur un réseau câblé). Un module de communication peut être compris dans le corps du compteur ou être accessible à distance, par exemple via une liaison filaire (environnements difficiles, sous-sols par exemple). Un compteur communicant peut être "intelligent" au sens où il peut embarquer des ressources de calcul locales. Il peut aussi être connecté à une box Internet, par Wifi ou par courant porteur en ligne. Selon des versions, le compteur communicant peut être « programmable à distance », peut être équipé d'un appareil de coupure à distance. Un compteur communicant peut être par exemple une prise électrique « intelligente » ou un robinet « intelligent », qui comprend des moyens de communication et/ou des moyens d'actuation physique et/ou des moyens de mesure. De manière optionnelle, il peut comprendre un affichage (e.g. témoin lumineux comme une LED verte ou rouge, voire un écran), permettant un retour d'information à destination de l'usager. Les moyens de communication sont généralement bidirectionnels (ou au moins unidirectionnel, un objet connecté peut être commandé à distance). Les moyens d'actuation physique comprennent par exemple des interrupteurs, résistances, condensateurs, valves, vis, roulements, etc) pour diminuer (progressivement) voire stopper l'accès à la ressource en eau ou en énergie, par exemple électrique. Les moyens de mesure comprennent des capteurs (e.g. courant, déplacement, température, débit d'eau etc) permettant de quantifier la consommation en eau ou en énergie.

Différentes technologies de télé-relève implémentées dans et par les compteurs communicants sont envisageables, notamment la technologie "walk by/drive by", une installation fixe de type AMI (unidirectionnelle) ou bien encore une installation fixe de type AMR (bidirectionnelle). Différents types de réseau peuvent être utilisés (réseau AMI ou AMR, entre autres). Un réseau AMI correspond généralement à de petits réseaux de télérelève (simple relevés). Un réseau AMR (ou "Automatic meter reading" en anglais) est bidirectionnel, c'est-à-dire que le compteur émet et reçoit des informations, éventuellement en temps réel. Les données récoltées peuvent être envoyées de manière sécurisée à une plateforme de données métier (104) via le réseau mobile Internet (103) par exemple. La plateforme de données métier peut être couplée à une base de données de clients (105) de la ressource télérelevée.

Le système comprend aussi un ou une pluralité de serveurs (106) permettant de récupérer, des données hors métier - données externes privées (108) récupérables sous accord ; données ouvertes (110) - de les stocker, de les traiter. Une donnée ouverte ou « Open Data » est une donnée numérique dont l'accès et l'usage sont laissés libres aux utilisateurs. Elle peut être d'origine publique ou privée, produite par une collectivité, un service public ou une entreprise. Des données additionnelles (112) comme des données cartographiques (i.e. des données de nature spatiale, comprenant des données de géolocalisation dans l'espace), des données sociodémographiques, peuvent aussi être récupérées. L'application de techniques d'échantillonnage statistique peut être mise en œuvre (par exemple un sous-ensemble de compteurs peut être déterminé) pour répondre aux besoins spécifiques de l'analyse ou améliorer l'étude des modes de consommation.

L'ensemble des données métiers et données externes qui sont récupérées vont être croisées selon le procédé de l'invention pour générer les indicateurs de mesure de fréquentation. Les résultats peuvent être fournis via une interface graphique d'un ordinateur (114) pour visualisation par un utilisateur final. Dans un mode de réalisation, l'interface utilisateur est accessible depuis un terminal client accédant à un serveur de données via au moins un réseau de communication.

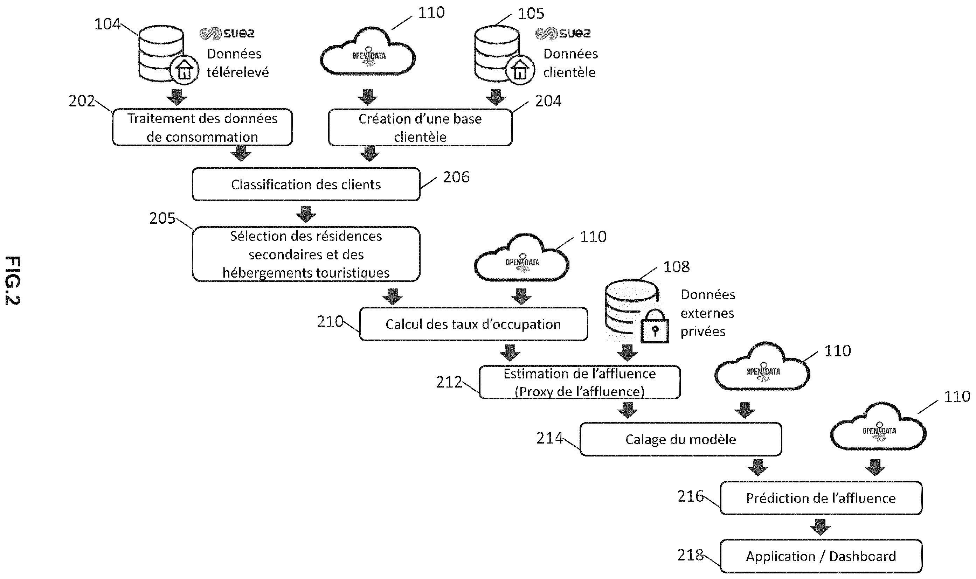

La figure 2 montre un enchainement d'étapes du procédé pour traiter des données hétérogènes et déterminer une fréquentation, selon un mode de réalisation de l'invention. Le procédé peut être implémenté pour un environnement tel que celui décrit en figure 1 à partir de données métiers de consommation d'eau. Les étapes de calculs peuvent être opérées sur un ordinateur comme par exemple l'ordinateur de visualisation (114) de la figure 1 ou encore sur une plateforme de calcul dédiée comprenant des processeurs configurés pour mettre en œuvre le procédé et permettant d'envoyer les résultats sur des ordinateurs distants. Un tel ordinateur ou plateforme de calcul comprend des composants spécifiquement programmés par instructions de code pour effectuer une ou plusieurs des étapes du procédé.

Dans une première étape (202), le procédé permet de récupérer des données brutes de consommation d'eau (104), de préférence depuis une base de données métier de télérelevé, et les transformer en une information exploitable, de consommation journalière par usager. Dans un mode de réalisation, les données de consommation brutes peuvent notamment comprendre des index de consommation (i.e. consommation cumulée) horodatée. Les données peuvent être disponibles sur un pas de temps variable, par exemple de six heures ou 1h, chaque usager pouvant avoir sa propre plage d'émission (les émissions d'index n'étant pas nécessairement synchronisées). Les données brutes de consommation peuvent aussi comprendre un débit maximal journalier daté représentant le volume maximal consommé, sur un pas de temps de 15mn par exemple.

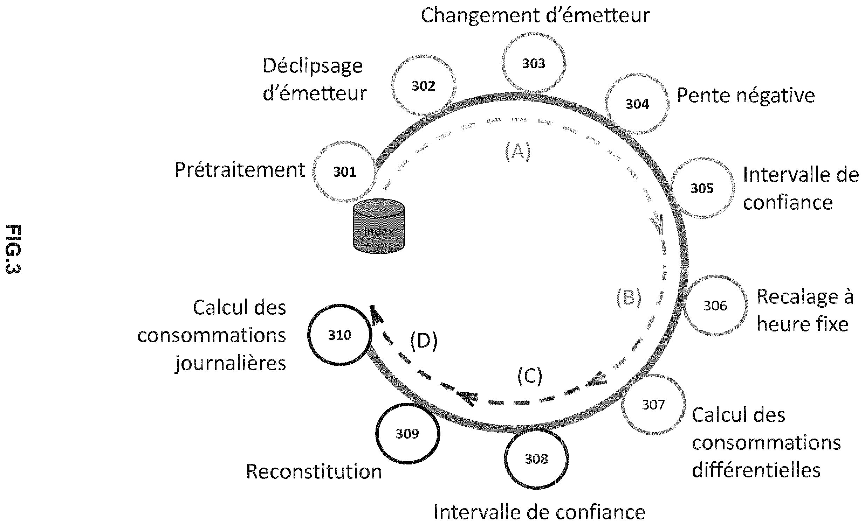

Dans un mode de réalisation, le processus de traitement des données brutes peut comprendre quatre phases (A, B, C, D), tel qu'illustré sur la figure 3. Un ou plusieurs filtres peuvent être appliqués afin d'exclure certains usagers ou certaines données considérées comme hors des objectifs de l'étude ou peu fiables pour améliorer les traitements ultérieurs. Les différentes données sont formatées i.e. rendues compatibles, puis fusionnées et/ou agrégées.

Une première phase (A) consiste à valider et fiabiliser une donnée brute « index de consommation ». La validation des données index (de consommation) repose sur une analyse statistique et une analyse métier croisées des index de consommation. Un prétraitement (301) sur les données brutes (par exemple les doublons peuvent être supprimés) permet d'identifier d'éventuelles anomalies techniques ou aberrations qui seraient liées par exemple à un déclipsage ou une fraude de l'émetteur (302), à un changement erroné d'émetteur (303), à des pentes négatives d'index (304). Des intervalles de confiance (305) peuvent être déterminés sur des données historiques à différents pas de temps pour décider du retrait de la donnée aberrante ou non.

Dans une deuxième phase (B), l'ensemble des index conservés est recalé par interpolation linéaire, à heure fixe (306), qui peut être toutes les 6h ou toutes les heures, en fonction du pas de temps. Un calcul des consommations (307) correspondant à la différence entre deux index est effectué.

Une troisième phase (C) consiste à valider les données de consommations précédemment calculées en identifiant des consommations aberrantes par la méthode des intervalles de confiance (308), par rapport à des compteurs qui sont en limite physique de comptage par exemple.

Une quatrième phase (D) consiste en la fiabilisation de la donnée de consommation. Les données manquantes (trous dans les données) ou invalidées à l'étape précédente sont reconstitués (309). La reconstitution des données est optionnelle et réalisée à l'échelle individuelle de chaque compteur à partir de son historique de consommation. Elle se base sur un profil de consommation établi pour chaque compteur, sur une semaine à pas de temps horaire. Cette reconstitution de données optionnelle peut être réalisée ultérieurement. Elle permet notamment de récupérer des données supplémentaires, par exemple des données pour des clients professionnels de l'hôtellerie.

La consommation compteur journalière est ensuite calculée (310) en agrégeant les données.

Ainsi, à partir de données brutes de type index de consommation d'eau, il est calculé (étape 202) pour chaque usager (attaché à un compteur) une consommation journalière exprimée en volume journalier ($m^3$/jour).

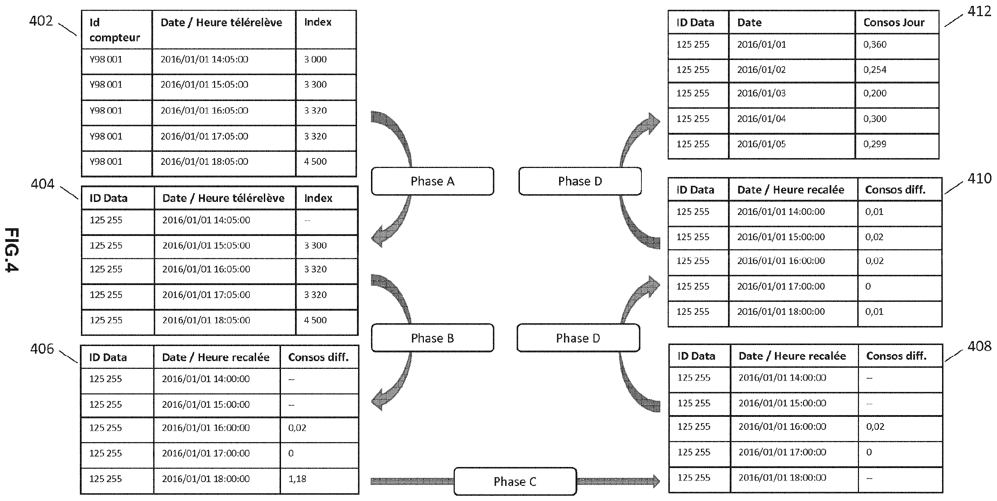

La figure 4 montre un exemple d'implémentation des phases A à D de l'étape 202 pour obtenir des consommations journalières en volume par usager à partir de données brutes de télérelève. Une première table (402) regroupe les valeurs de télérelève (colonne « Index » : 3000, 3300, 320, 3320, 4500) à un pas de temps donné (Colonne « Date/Heure Télérelevé. » : 2016/01/01 14:05:00 à 18 :05 :00 toutes les heures) pour un compteur usager identifié (colonne « Id compteur » : Y98 001). A l'issue de la phase A, les données aberrantes pour ce compteur sont supprimées, et une deuxième table (404) est générée. Dans l'exemple montré, la donnée correspondant à l'index de valeur 3000 n'est pas retenue. A ce stade, un identifiant de suivi pour le traitement des données (ID Data : 125 255 sur l'exemple) est assigné au télérelevé du compteur tel que montré par la colonne « ID Data ». L'identifiant de données ID Data est attribué de manière aléatoire à chaque compteur. Après application des étapes 306 et 307 de la phase B, il est généré une troisième table (406) qui associe pour chaque « ID Data », une valeur de consommation différentielle (colonne « Consommation Diff ») obtenue après recalage des index à heure fixe (colonne « Date / Heure Recal. »). L'application de l'étape 308 de la phase C permet de nettoyer la troisième table (406) de données considérées aberrantes et générer une quatrième table (408). Dans l'exemple, la donnée « 1,18 » est supprimée.

Une cinquième table (410) peut optionnellement être générée pour reconstituer des données manquantes (ici les données aux heures recalées 14 :00 :00 / 15 :00 :00 et 18 :00 :00).

Comme décrit précédemment, l'application de l'étape 310 de la phase D permet de générer une consommation journalière en volume pour un compteur donné. Sur l'exemple de la figure 4, la consommation en volume pour la date illustrée du 2016/01/01 est obtenue à partir de la quatrième (408) ou de la cinquième table (410), et devient une entrée d'une sixième table (412) qui regroupe l'ensemble des consommations en volume (colonne « consommations m$^3$ ») par jour (Date) pour un compteur donné (ID Data). Il est ainsi possible d'établir sur une période donnée (semaine / mois / année) pour chaque compteur de télérelève un suivi de la consommation en volume par jour.

Revenant à la figure 2, après l'étape 202 d'obtention des consommations journalières en volume par compteur, le procédé permet, à partir d'une base de données « Clientèle » (204), de procéder à des classifications de l'ensemble des usagers (étape 206) et établir un profilage touristique. La base Clientèle est créée à partir de données métiers consommation (105) correspondant à des données usagers des compteurs en télérelève (fournis par le prestataire de la ressource télérelevée) et à partir de données hors métier (110), externes privées et/ou données ouvertes.

L'étape de classification consiste pour chaque usager présent dans la base de données Clientèle à le classer soit dans une première catégorie dite clientèle de professionnels, soit dans une deuxième catégorie dite clientèle de non-professionnels ou clientèle domestique. L'étape de classification « professionnels vs domestiques » comprend de plus au sein de chaque classe, pour la classe de la clientèle professionnelle une catégorisation des activités, et pour la classe de la clientèle domestique une caractérisation du statut de l'habitat.

La catégorisation des activités de la clientèle de professionnels est réalisée à partir des informations disponibles dans la base de données Clientèle, tel que le nom du redevable, sa civilité, sa classe ou type de client (particulier, administration, collectivité, professionnel ou syndic d'immeuble), son usage de l'eau (chantier, incendie, normal ou vert (arrosage)), à partir des informations de consommation annuelle obtenues par le traitement des données d'index brutes (étape 202), et par recoupement de ces informations avec des listings d'hôtels, de résidences de tourisme, de chambres ou maisons d'hôte, de campings et de restaurants indiquant entre autres le nom, l'adresse, afin de les distinguer d'entreprises, d'administrations et collectivités qui ne sont pas dans des activités en lien direct avec le tourisme. Ainsi, chaque usager professionnel est classifié selon son type d'activité. Dans un mode de réalisation, le type d'activité peut notamment être une activité d'hébergement touristique, et/ou une activité de restauration, au sens de la nomenclature NAF des activités françaises. L'homme du métier pourra cependant définir des types d'activité de professionnels différents permettant de récupérer des données en lien avec l'analyse de fréquentation faite.

La caractérisation du statut d'une habitation pour la clientèle domestique, permet d'abord de déterminer si un habitat est occupé ou vacant. Des règles sont définies pour déterminer l'occupation ou la vacance d'une habitation. Selon le procédé, le statut occupé/libre de chaque habitation est établi à partir de l'analyse du nombre de jours de présence par an, qui est évalué par la somme du nombre de jours d'occupation sur la dernière année civile complète (ou à défaut sur les données historiques à disposition) et/ou de la répartition du volume journalier consommé dans l'année. Dans un mode de réalisation, des seuils de consommation en eau sont fixés :

- une habitation est considérée occupée un jour 'j' si le débit maximal journalier en j est strictement supérieur à 4 l/h. A défaut de disponibilité de la donnée de débit maximal journalier, l'habitation est considérée occupée si le volume journalier en j est supérieur à 50 l/jour, valeurs en deçà desquelles une fuite d'eau est suspectée et non une présence humaine ;
- une habitation est considérée inoccupée un jour 'j' si sa consommation en j est inférieure ou égale à au moins l'un des seuils limites définis.

La caractérisation du statut de chaque habitation est affinée en vérifiant d'autres critères. Dans un mode de réalisation préférentiel, le nombre de jours d'occupation par an est pris en compte. Lorsque le nombre de jours d'occupation par an est supérieur à un seuil pris en nombre de mois, un logement sera qualifié de résidence principale. Ce seuil peut être variable selon l'étendue de la période touristique du territoire considéré. Ainsi, pour des communes ou stations balnéaires, un logement est qualifié de résidence principale lorsque son occupation est supérieure ou égale à 8 mois. Pour les stations de sport d'hiver, un logement est qualifié de résidence principale lorsque son occupation est supérieure ou égale à 10 mois.

Dans le mode de réalisation préférentiel, un autre critère pris en compte est le volume journalier consommé pendant et hors périodes touristiques. Une période touristique peut être une période estivale (saison été : de juin à septembre inclus), des périodes de vacances scolaires (françaises et celles des pays visitant le plus le territoire français), des jours de week-end et des jours fériés (y compris des jours de pont). En appliquant le test statistique bien connu de Student, une comparaison des moyennes entre deux échantillons permet de révéler s'il existe une différence significative entre la consommation sur les périodes touristiques et la consommation hors périodes touristiques sur la dernière année civile complète (ou à défaut sur les données historiques à disposition). Lorsqu'il existe une différence significative (c'est-à-dire une probabilité à 95%), entre les deux volumes journaliers consommés, un logement sera qualifié de résidence secondaire.

Dans le mode de réalisation préférentiel, un autre critère pris en compte est le nombre de jours consécutifs d'occupation d'un logement sur l'année. Lorsque le nombre de jours d'occupation est inférieur à 5% du temps sur l'année et que l'occupation n'excède pas 5 jours consécutifs, un logement sera qualifié de logement vacant.

Ainsi, une fois l'étape de caractérisation terminée, chaque usager de la catégorie domestique est classé selon le statut de son habitation :résidence principale / résidence secondaire / logement vacant.

Après l'étape de classification (professionnels / domestiques) et de catégorisation (activité pour professionnels / statut habitat pour domestiques), le procédé permet dans une étape suivante (208) de sélectionner une ou plusieurs catégories d'intérêt pour lesquelles il est souhaité de connaitre le taux d'occupation. Avantageusement, la catégorisation offre une granularité qui permet de calculer des indicateurs de fréquentation sur des cibles représentatives de l'attractivité touristique d'un territoire. Dans l'exemple décrit, les catégories d'intérêt sélectionnées sont les résidences secondaires et les hébergements touristiques.

Dans une étape suivante (210), le procédé permet de calculer par catégorie d'intérêt des taux d'occupation à différentes échelles de temps et d'espace. Les périodes de temps peuvent être définies pour des calculs de taux d'occupation journalier, hebdomadaire, mensuel ou autre. La zone de calcul peut couvrir un territoire très étendu ou descendre au niveau d'une maille spatiale fine, par exemple de l'ordre de l'hectare. Les paramètres de temps et d'espace peuvent être prédéfinis pour chaque catégorie d'intérêt et pour une application donnée, ou être définis dynamiquement par un utilisateur via par exemple l'interface de dialogue (114).

Le taux d'occupation est un indicateur qui est calculé pour chacune des catégories d'intérêt sélectionnées, par le croisement des données de volume journalier de consommation (table 412 obtenue à l'étape 202) avec des paramètres issus de données externes (110).

Dans l'exemple décrit, le procédé permet de calculer le taux d'occupation pour les résidences secondaires et le taux d'occupation pour les hébergements touristiques.

Dans un mode de réalisation, le taux d'occupation des résidences secondaires sur une période et une maille spatiale données est calculé comme étant le rapport entre la somme du nombre de jours d'occupation des résidences secondaires calculé précédemment, sur la période et maille spatiale considérées, et le produit du nombre total de résidences secondaires sur la maille considérée par le nombre de jours considéré sur la période. Il peut être exprimé selon l'équation suivante :

$$Taux\ occupation_{maille\ m,\ période\ p}$$

$$= \frac{\sum_{i=1}^{p} Nombre\ de\ résidences\ secondaires\ occupés_{jour\ i}}{Nombre\ de\ résidences\ secondaires * p}$$

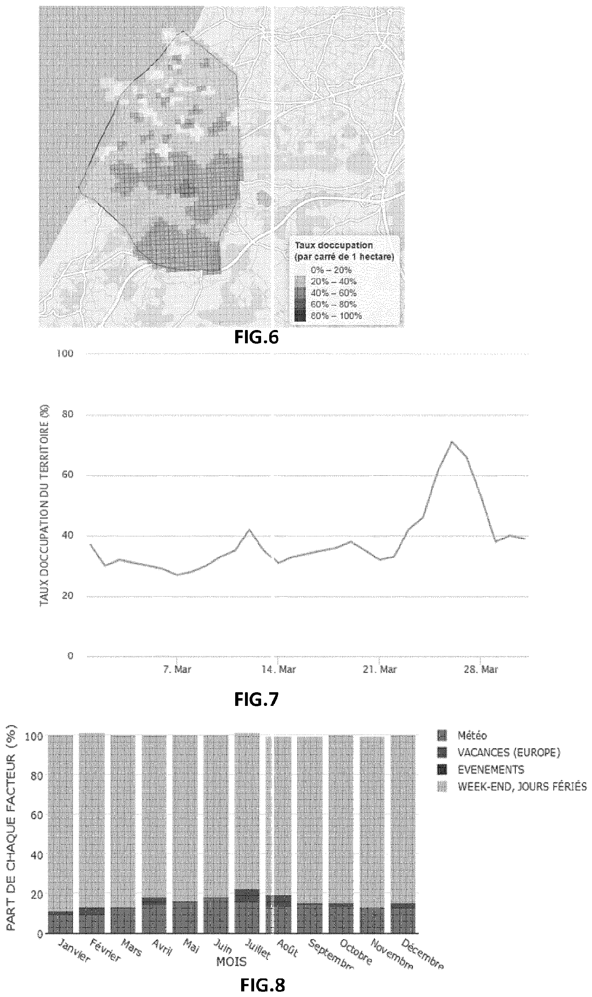

La figure 6 représente un exemple de taux d'occupation moyen calculé sur une période donnée et une maille spatiale donnée (carrés de 1 hectare).

Le nombre journalier de personnes présentes pour une maille spatiale donnée, est le rapport entre le volume journalier consommé et une consommation journalière de référence par personne. Dans un mode de réalisation, cette référence est fixée à 110 litres/personne/jour.

La capacité maximale d'une résidence secondaire exprimée en nombre de personnes est définie par le rapport entre la consommation maximale de la résidence et une consommation journalière de référence par personne (fixée à 110 litres/personne/jour). La consommation maximale par résidence est obtenue par le calcul du 95ème centile de la consommation journalière de la résidence lorsque celle-ci est occupée. La capacité maximale peut être estimée à partir des paramètres suivants :

- des volumes journaliers consommés. Un test de Rosner peut être appliqué à la chronique des données pour filtrer les valeurs aberrantes (les « outliers » en anglais) pouvant correspondre à des usages spécifiques de l'eau (arrosage, remplissage de piscine, etc.) ; et
- les jours où la résidence est occupée selon les données calculées à l'étape précédente (206).

Dans un mode de réalisation, le taux d'occupation pour les hébergements touristiques représente le rapport entre le nombre de lits occupés et le nombre de lits offerts par les hébergements. Il est calculé au regard de trois informations :

(1) la détermination de la consommation « maximale » de la ressource, qui correspond à la plus forte fréquentation (pic de fréquentation) pour l'ensemble des hébergements touristiques, en fonction de la profondeur de l'historique de consommation. Avec une profondeur d'historique de consommations journalières de moins d'une année complète, le pic de fréquentation est celui mesuré le jour de plus forte fréquentation définie à dire d'experts du secteur pour l'ensemble des hébergements. Avec une profondeur d'historique de consommations journalières de plus d'une année complète, le pic de fréquentation d'un hébergement est celui défini par le 92ème centile de sa consommation, seuil à partir duquel ce dernier est considéré complet ;
(2) la connaissance de la capacité d'hébergements de chaque hébergement touristique, mesurée en nombre de lits et déterminée à partir de données hors métiers (110) procurant la capacité d'accueil (en nombre de chambres, de lits, de tables, d'emplacements de camping) des hébergements ; et
(3) le volume journalier consommé de chaque hébergement. Dans un mode de réalisation, ce volume est corrigé d'une consommation de référence liée à son entretien. Cette dernière est évaluée pour chaque hébergement à partir de la consommation minimale non nulle observée sur la dernière année civile disponible.

Le croisement de ces trois informations permet d'évaluer le taux d'occupation journalier par hébergement touristique. En considérant qu'un hébergement est occupé à 100% de sa capacité d'hébergement lorsqu'il réalise ou dépasse sa consommation « maximale », alors son occupation un jour 'j', exprimée en nombre de lits occupés, est donnée comme étant le rapport entre le produit de son volume journalier en $j$ (corrigé le cas échéant d'une consommation de référence) par sa capacité d'hébergement en nombre de lits et son volume journalier consommé maximal (correspondant au 92ème centile de sa consommation). Son taux d'occupation le jour $j$ est alors le nombre estimé de lits occupés rapporté à sa capacité d'hébergement. Le nombre journalier de personnes présentes correspond au nombre journalier de lits occupés et la capacité d'accueil correspond à la capacité d'hébergements.

Le taux d'occupation moyen sur une période donnée, d'hébergements ou d'un ensemble d'hébergements regroupés selon leur catégorie et/ou leur type, est la moyenne des taux d'occupation journaliers des hébergements considérés. La figure 7 représente un exemple de taux d'occupation moyen sur une période donnée pour des types d'hébergements donnés.

Finalement, le taux d'occupation moyen sur une période donnée et pour une zone définie, des résidences secondaires et hébergements touristiques, est le rapport entre la somme des personnes présentes dans les résidences secondaires et hébergements touristiques sur ladite période et ladite zone, et la somme des capacités d'accueil maximales des résidences secondaires et hébergements touristiques sur ladite période et ladite zone.

Ainsi, par le croisement de données métiers avec des données hors métier, l'étape (210) permet de calculer des taux d'occupation moyen sur une période donnée et pour une zone définie. Avantageusement, le procédé permet d'anonymiser les résultats produits quant à l'identification d'usagers. Partant de données individuelles au niveau d'un identifiant de compteur de télérelevé, les traitements successifs qui sont appliqués qui consistent à modifier la structure des données (allocation d'un identifiant de données (ID data), agrégation de données (ID maille)) permettent d'anonymiser les données finales et de produire des résultats à des niveaux de granularité qui ne permettent pas d'identifier des usagers.

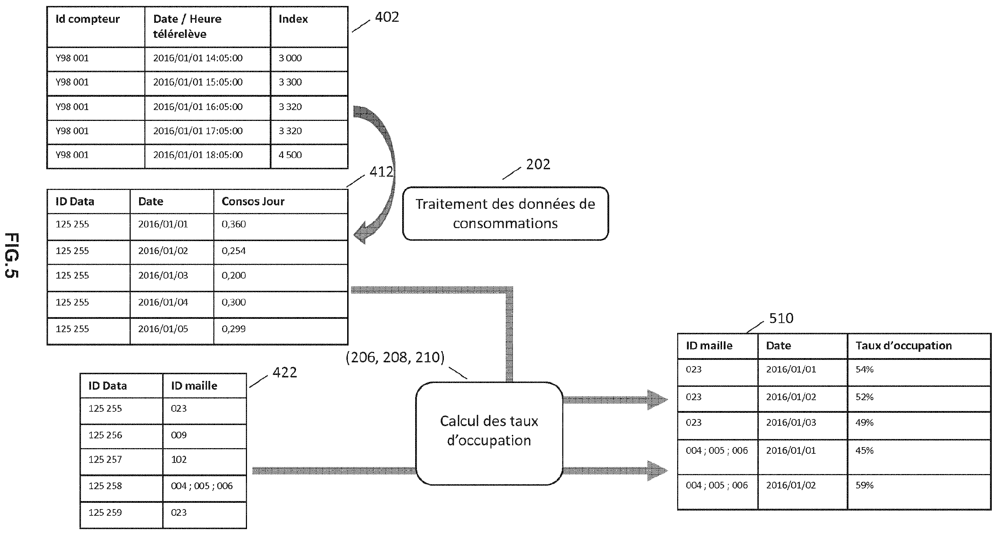

La figure 5 illustre la génération d'une table (510) de taux d'occupation moyen (colonne Taux d'occupation) pour une maille spatiale donnée (colonne ID maille) et une période de temps donnée (colonne Date). Une maille est identifiée par un identifiant de maille (ID maille), et représente une zone qui peut contenir un ou plusieurs hébergements. Une table d'identifiants (422) permet de mettre en correspondance les identifiants de données (ID Data) avec les identifiants de maille. Un même identifiant de données peut être attribué à une ou plusieurs mailles, et plusieurs ID Data peuvent être attribués à un même ID maille. Pour l'exemple d'application décrit, la table (422) identifie pour chaque résidence secondaire, la maille à laquelle elle est attribuée. Plusieurs résidences peuvent être attribuées à une même maille. Ainsi l'ID Data « 125 255 » est attribué à l'ID maille « 023 », l'ID Data « 125 258 » est attribué aux ID maille « 004 ; 005 ; 006 », l'ID Data « 125 259 » est attribué à l'ID maille « 023 ». Avantageusement, l'agrégation de mailles permet l'anonymisation des taux d'occupation. Dans certains cas, une maille peut ne contenir qu'une ou peu de résidences secondaires. Afin de respecter au maximum l'anonymisation des données, certaines mailles sont agrégées entre elles spatialement afin de n'en former qu'une seule. Cette dernière, pour permettre une anonymisation fiable des données, est de préférence composée au minimum de 10 résidences secondaires. Les taux d'occupation sont calculés par maille (ou par regroupement de maille) et par jour.

Revenant à la figure 2, le procédé permet avantageusement à partir du calcul des taux d'occupation sur une période donnée et pour une zone définie, d'appréhender l'impact économique du tourisme par catégories d'intérêt (résidences secondaires, hébergements touristiques, résidences secondaires et hébergements touristiques) en termes de recettes estimées liées aux taux d'occupation et de potentiel économique lié à une occupation maximale. Aussi à l'étape suivante (212), le procédé permet de créer un modèle de l'affluence (aussi nommé proxy de l'affluence) pour asseoir la modélisation de l'affluence touristique à différentes échelles de temps. Le proxy de l'affluence est un indicateur de l'affluence de l'ensemble d'un territoire exprimé en « nombre journalier de personnes actives » et constitue la donnée d'entrée pour modéliser l'affluence touristique et la prédire sur un pas de temps défini, hebdomadaire et mensuel.

Le proxy de l'affluence prend en compte des données liées à la fréquentation touristique, comme des chroniques de volumes journaliers consommés pour des cibles particulières, converties en nombre de personnes et des données historiques annexes qui peuvent être fournies par les collectivités ou des entreprises privées du territoire.

Dans un mode de réalisation de l'exemple décrit de la consommation en eau, le modèle de l'affluence repose sur les données suivantes :

- les volumes journaliers consommés par les restaurants, rapportés à une consommation d'eau de référence par couvert pour obtenir un nombre de couverts servis et de personnes présentes. La consommation d'eau de référence peut être prise égale à 15L/couvert ; et
- les taux d'occupation des résidences secondaires et des hébergements touristiques, convertis en nombre de personnes présentes.

Dans un mode de réalisation, le modèle de l'affluence peut être assimilé à un modèle de type ARMAX, de la forme :

$$y_t = \beta \vec{x}_t + u_t$$

où $y_t$ est l'affluence au temps $t$, $\vec{x}_t$ est un vecteur de facteurs externes et $u_t$ une erreur qui suit un modèle ARMA.

Le modèle est ensuite calé (étape 214) par rapport aux différents paramètres de l'affluence. Le modèle d'affluence permet de simuler l'affluence touristique journalière en se basant sur l'affluence passée (modèle de séries chronologiques), mais aussi sur l'impact de facteurs externes qui peuvent l'expliquer (modèles de régression) comme les conditions météorologiques (température, pluviométrie, enneigement (pour les stations de sports d'hiver)), les périodes de vacances scolaires de la France et des pays qui fréquentent le plus le territoire, les effets calendaires (saison, nombre de jours fériés, le numéro de la semaine, etc.) et la popularité des évènements organisés sur le territoire. Les facteurs externes peuvent provenir de diverses sources (108) produisant des données ouvertes qui peuvent être utilisées directement ou après traitement. Par exemple, une liste évènements organisés donnant le nom, la date, le lieu des évènements (spectacles, séminaires, festivals, concerts, visites, expositions, conférences, foires, meeting etc.) permet de calculer leur popularité à partir des réseaux sociaux. En récupérant des posts Facebook sur les pages concernant le territoire, sur une fenêtre temporelle de 160 jours précédant l'évènement par exemple, une « distance » à l'évènement, comprise entre 0 et 1, est attribuée à chaque post, fonction du nombre de mots décrivant l'évènement présent dans le texte du post, rapporté au nombre total de mots décrivant l'évènement. La popularité de l'évènement est alors évaluée en lui affectant la somme pondérée du nombre de « like » par post par la « distance » attribuée. La figure 8 illustre l'influence de différents paramètres sur la fréquentation.

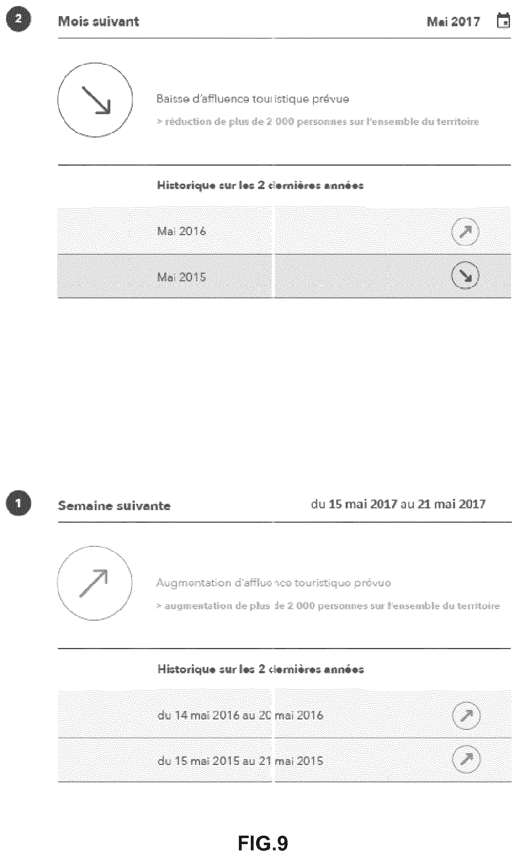

Les résultats du modèle calé sur l'ensemble du territoire sont ensuite agrégés aux échelles hebdomadaire et mensuelle pour permettre de prédire (étape 216) qualitativement la variation d'affluence relativement à l'affluence de la semaine et du mois précédents. Le résultat peut être disponible sur une interface utilisateur (étape 218) sous une forme qualitative à trois niveaux (affluence identique, beaucoup plus forte, beaucoup moins forte) qui est construite à partir de seuils exprimés en valeur absolu d'affluence (pour éviter de prévenir d'une variation importante en pourcentage mais faible en nombre absolu de personnes), seuils définis par l'observation des variations hebdomadaires et mensuelles de l'affluence. Les prédictions de variation d'affluence peuvent également être comparées à celles observées à la même semaine et au même mois historiques des années précédentes. La figure 9 illustre une comparaison de prédictions de variation d'affluence dans le temps telle que présenté sur une interface utilisateur (114). Une telle interface peut être avantageusement un tableau de bord interactif qui offre différents résultats (intermédiaires et/ou finaux) obtenus par le procédé de l'invention. Ces résultats peuvent être rendus accessibles aux utilisateurs, par exemple au travers de portails ou d'applications informatiques (e.g. Web, Internet, Intranet, Apps ou applications mobiles, etc) accessibles depuis leurs terminaux.

Les interfaces utilisateurs peuvent notamment comprendre des fonctionnalités de calcul de taux d'occupation à des échelles spatio-temporelles que l'utilisateur définit, mais aussi des fonctionnalités d'analyse ou de suivi des prédictions d'affluence par la mise en œuvre du modèle d'affluence.

Dans différents modes de réalisation, l'interface utilisateur peut offrir :

- un espace de suivi spatio-temporel des taux d'occupation des résidences secondaires et/ou des hébergements touristiques ;
- un espace spécifique pour des stations de sport d'hiver de suivi temporel des taux d'occupation des lits froids, tièdes et chauds et de leur répartition géographique ;
- un espace d'analyse spatio-temporelle de l'impact économique lié aux taux d'occupation des résidences secondaires et/ou des hébergements touristiques ;
- un espace de comparaison spatio-temporelle des taux d'occupation des résidences secondaires et/ou des hébergements touristiques entre deux périodes données et sur un maillage géographique fin ;
- un espace d'analyse des taux d'occupation au regard de données exogènes (périodes de vacances scolaires, évènements organisés sur le territoire, conditions climatiques, effets calendaires) ;
- un espace de compréhension des facteurs explicatifs de l'affluence touristique du territoire et de leur importance relative ;
- un espace de projection et de comparaison de la variation d'affluence touristique sur le territoire sur un pas de temps hebdomadaire et mensuel.

Il a été décrit un exemple de mise en œuvre du procédé de l'invention permettant à des collectivités territoriales et locales à caractère touristique et à des structures impliquées activement dans la promotion du tourisme sur leur territoire en faveur du développement de l'économie touristique locale (Office de Tourisme, Comité Départemental du Tourisme), d'optimiser la gestion et l'attractivité de leurs territoires par l'intermédiaire d'indicateurs de fréquentation établis à des échelles fines (spatiale et temporelle). Le procédé peut avantageusement être associé à des outils existants de suivi et d'analyse de la fréquentation touristique afin de renforcer la connaissance et la maîtrise des fluctuations d'occupation à des échelles fines, des collectivités, et augmenter leur capacité à optimiser leur attractivité.

Par ailleurs, l'enrichissement ou la consolidation des données mobilisées par la collecte de données complémentaires (certaines données non ouvertes ou ouvertes mais parfois partielles étant très informatives) auprès de la collectivité ou d'organismes publiques ou de sociétés privées du territoire (par exemple, Office de Tourisme ou gestionnaire des remontées mécaniques pour les stations de sports d'hiver) permet de fiabiliser certains indicateurs de fréquentation. Par l'utilisation de telles données complémentaires, les indicateurs suivants s'en trouvent fiabilisés :

- amélioration de la précision du taux d'occupation des résidences secondaires par une meilleure qualification du statut des résidences en collectant la liste des meublés particuliers mis en location et gérés par la collectivité et/ou l'Office de Tourisme. Une des limites de la classification des résidences tient effectivement au fait que les résidences secondaires très souvent louées ou occupées (plus de 8 mois par an) sont considérées à tort comme des résidences principales.
- amélioration de la précision du taux d'occupation des hébergements touristiques par l'élargissement du panel constitutif du réseau marchand en collectant la liste complète et leurs capacités d'hébergements auprès de l'Office de Tourisme. Dans les données ouvertes, ces informations peuvent être partielles pour certains hébergements touristiques.
- amélioration de la prédiction de variation d'affluence par l'intégration de données complémentaires pour constituer et consolider le proxy de l'affluence. La collecte des données de billetterie des évènements rapportées par l'Office de Tourisme, de ventes de forfaits pour les stations de sports d'hiver converties en nombre de personnes présentes, de données relatives aux chiffres des transports (parking, aéroports, etc.) ou encore aux statistiques du nombre de personnes présentes via les connexions wifi des téléphones portables affinent la tendance d'évolution de l'affluence touristique sur le territoire et donc les prédictions d'affluence à venir.
- amélioration de la qualification de la popularité des évènements par la collecte auprès de l'Office de Tourisme des données de billetterie des évènements. La taille optimale de la fenêtre de récupération des posts Facebook est déterminée en recherchant la période précédant l'évènement pour laquelle la corrélation est maximale entre la popularité calculée et les données de billetterie.

Par ailleurs, l'acquisition de données complémentaires notamment financières permet d'améliorer la prédiction de la variation d'affluence, mais aussi d'amener une vision économique de l'affluence touristique. Ainsi, une visualisation spatiale et temporelle des actions financières menées sur un territoire permet d'enrichir le modèle prédictif et mesurer l'impact économique du tourisme sur le territoire étudié. Cette nouvelle vision spatio-temporelle contribue au développement économique d'un territoire en permettant d'identifier par exemple, des zones d'implantation pour de nouveaux commerces.

**Revendications**

1. Un procédé de prédiction d'affluences spatio-temporelles sur un territoire, le procédé étant mis en œuvre par ordinateur et comprenant des étapes consistant à :

   - (202) recevoir depuis une pluralité de compteurs communicants dudit territoire, des données métier brutes ou valeurs de télérelève, représentatives de la consommation d'une ressource pour chaque compteur, et transformer pour chaque compteur communicant, les données reçues en une information formatée de consommation de ladite ressource par usager, l'étape de transformation consistant au moins à : - assigner de manière aléatoire un identifiant de données 'ID Data' à chaque compteur communicant ; - calculer pour chaque identifiant de données, une valeur de consommation différentielle entre deux index de relevé ; et - calculer une valeur en volume de consommation journalière pour chaque identifiant de données 'ID Data', à partir des valeurs de consommation différentielle ;
   - (206) combiner les valeurs en volumes de consommation journalière avec des données additionnelles d'identification d'usagers, pour créer des catégories d'usagers de ladite ressource, chaque catégorie d'usagers définissant un profil d'usager pour chaque usager qui comprend au moins une information sur le type d'activité ou sur le statut d'habitation de l'usager ;
   - (208) sélectionner des profils d'usager ayant un même type d'activité et/ou un même statut d'habitation ;
   - (210) calculer pour les profils d'usager sélectionnés des taux d'occupation moyens, l'étape de calcul consistant au moins à : - définir sur ledit territoire des zones spatiales et identifier chaque zone par un identifiant de maille 'ID maille' ; - associer les identifiants de données 'ID Data' avec les identifiants de maille 'ID maille', un même identifiant de données pouvant être attribué à un ou plusieurs identifiants de maille, et plusieurs identifiants de données pouvant être attribués à un même identifiant de maille ; et - calculer des taux d'occupation moyens pour des zones spatiales données et des périodes de temps données ;
   - (212) générer à partir des calculs de taux d'occupation moyen, un modèle prédictif d'affluence pour ledit territoire, ledit modèle permettant de prendre en compte différents paramètres d'affluence supplémentaires ; et
   - (216) utiliser ledit modèle prédictif d'affluence pour prédire des variations d'affluence pour différentes zones dudit territoire et sur différentes périodes de temps.

2. Procédé selon la revendication 1 dans lequel les données métier brutes comprennent des index de consommation horodatée et l'étape de transformer pour chaque compteur communicant, les données reçues en volumes journaliers de consommation, consiste au moins à appliquer des filtres pour éliminer pour chaque compteur communicant des valeurs de télérelève aberrantes, les valeurs conservées correspondant à des index de consommation à différents pas de temps ; à recaler à intervalle de temps fixe l'ensemble des index de consommation conservés ; et à agréger les données.

3. Le procédé selon la revendication 1 ou 2 dans lequel les données additionnelles d'identification d'usagers comprennent des données sur les usagers des compteurs en télérelève et des données externes privées et/ou des données ouvertes, et dans lequel les catégories d'usagers générées comprennent au moins une catégorie d'usagers professionnels et une catégorie d'usagers domestiques.

4. Le procédé selon l'une quelconque des revendications 1 à 3 dans lequel le type d'activité de l'usager définit notamment une activité d'hébergement touristique ou une activité de restauration, et le statut d'habitation de l'usager définit notamment une résidence principale ou une résidence secondaire ou un logement vacant.

5. Le procédé selon la revendication 4 dans lequel l'étape de calculer un taux d'occupation journalier consiste à calculer un taux d'occupation journalier pour les hébergements touristiques et un taux d'occupation journalier pour les résidences secondaires.

6. Le procédé selon la revendication 5 dans lequel l'étape du calcul du taux d'occupation moyen pour les hébergements touristiques prend en compte la consommation maximale de la ressource correspondant à un pic de fréquentation pour l'ensemble des hébergements touristiques, la capacité d'hébergements de chaque hébergement, et le volume journalier consommé de chaque hébergement.

7. Le procédé selon la revendication 5 dans lequel l'étape du calcul du taux d'occupation moyen pour les résidences secondaires prend en compte un nombre de résidences secondaires sur une zone donnée et un nombre de jours d'occupation de ces résidences secondaires sur une période donnée.

8. Le procédé selon l'une quelconque des revendications 1 à 7 dans lequel l'étape de générer un modèle prédictif d'affluence consiste à prendre en compte des données externes additionnelles liées à la fréquentation touristique.

9. Le procédé selon la revendication 8 dans lequel le modèle prédictif d'affluence est un modèle de type ARMAX.

10. Le procédé selon l'une quelconque des revendications 1 à 9 dans lequel l'étape de prédiction de la variation d'affluence est faite pour une période hebdomadaire ou mensuelle.

11. Le procédé selon l'une quelconque des revendications 1 à 10 comprenant de plus une étape pour afficher les résultats des calculs sur au moins un écran de visualisation.

12. Le procédé selon l'une quelconque des revendications 1 à 11 dans lequel la ressource consommée est de l'eau ou de l'électricité.

13. Un dispositif permettant de prédire des affluences spatio-temporelles sur un territoire, le dispositif comprenant des moyens pour mettre en œuvre les étapes du procédé selon l'une quelconque des revendications 1 à 12.

14. Le dispositif selon la revendication 13 dans lequel les moyens pour mettre en œuvre l'étape de la revendication 11 consistant à afficher les résultats des calculs sur au moins un écran de visualisation, comprennent une interface utilisateur de dialogue configurée pour définir des échelles spatio-temporelles pour lesquelles calculer des taux d'occupation et pour faire de l'analyse et du suivi de prédictions d'affluence.

15. Un produit programme d'ordinateur comprenant un programme, ledit programme comprenant des instructions de code permettant d'effectuer les étapes du procédé selon l'une quelconque des revendications 1 à 12, lorsque ledit programme est exécuté sur un ordinateur.

**Patentansprüche**

1. Verfahren zum Vorhersagen von räumlich-zeitlichem Besucherandrang in einem Gebiet, wobei das Verfahren computerimplementiert ist und Schritte umfasst, die auf Folgendem bestehen:

- (202) Empfangen, von einer Vielzahl von kommunizierenden Zählern des Gebiets von rohen Geschäftsdaten oder Fernablesewerten, die repräsentativ für den Verbrauch einer Ressource für jeden Zähler sind, und Umwandeln, für jeden kommunizierenden Zähler, der empfangenen Daten in formatierte Informationen über den Verbrauch der Ressource pro Nutzer, wobei der Umwandlungsschritt mindestens aus Folgendem besteht: - zufälliges Zuweisen eines Datenidentifikators "ID Data" zu jedem kommunizierenden Zähler; - Berechnen, für jeden Datenidentifikator, eines Differenzverbrauchswerts zwischen zwei Ableseindizes; und - Berechnen eines Volumenwerts des täglichen Verbrauchs für jeden Datenidentifikator "ID Data" anhand der Differenzverbrauchswerte;
- (206) Kombinieren der täglichen Verbrauchsvolumenwerte mit zusätzlichen Nutzeridentifikationsdaten, um Kategorien von Nutzern der Ressource zu erstellen, wobei jede Nutzerkategorie ein Nutzerprofil für jeden Nutzer definiert, das mindestens Informationen über die Art der Aktivität oder den Wohnstatus des Nutzers enthält;
- (208) Auswählen von Nutzerprofilen, die eine ähnliche Art von Aktivität und/oder einen ähnlichen Wohnstatus aufweisen;
- (210) Berechnen von durchschnittlichen Belegungsraten für die ausgewählten Nutzerprofile, wobei der Berechnungsschritt mindestens aus Folgendem besteht: - Definieren, auf dem Gebiet, von räumlichen Zonen und Identifizieren jeder Zone durch einen Rasteridentifikator "Mesh-ID"; - Assoziieren der Datenidentifikatoren "Data ID" mit den Rasteridentifikatoren 'Mesh ID", wobei ein und derselbe Datenidentifikator einem oder mehreren Rasteridentifikator zugewiesen werden kann und mehrere Datenidentifikatoren demselben Rasteridentifikator zugewiesen werden können; und - Berechnen von durchschnittlichen Belegungsraten für bestimmte räumliche Bereiche und Zeiträume;
- (212) Erzeugen, anhand von Berechnungen der durchschnittlichen Belegungsrate, eines Vorhersagemodell für Besucherandrang für das Gebiet, wobei es das Modell ermöglicht, verschiedene zusätzliche Besucherandrangparameter zu berücksichtigen; und
- (216) Verwenden des Vorhersagemodells für den Besucherandrang, um Veränderungen des Besucherandrangs für verschiedene Zonen des Gebiets und über verschiedene Zeiträume vorherzusagen.

**2.** Verfahren nach Anspruch 1, wobei die rohen Geschäftsdaten zeitgestempelte Verbrauchsindices umfassen und der Schritt, für jeden kommunizierenden Zähler die empfangenen Daten in tägliche Verbrauchsvolumen umzuwandeln, zumindest darin besteht, Filter anzuwenden, um für jeden kommunizierenden Zähler abweichende Werte der Fernablesung zu eliminieren, wobei die beibehaltenen Werte den Verbrauchsindices in verschiedenen Zeitschritten entsprechen; die Gesamtheit der beibehaltenen Verbrauchsindices in einem festen Zeitintervall neu zu kalibrieren; und die Daten zu aggregieren.

**3.** Verfahren nach Anspruch 1 oder 2, die zusätzlichen Nutzeridentifikationsdaten umfassend Daten über die Nutzer der fernauslesenden Zähler und externe private Daten und/oder offene Daten, und wobei die erzeugten Nutzerkategorien mindestens eine Kategorie von Geschäftsnutzern und eine Kategorie von Haushaltsnutzern umfassen.

**4.** Verfahren nach einem der Ansprüche 1 bis 3, wobei die Art der Aktivität des Nutzers insbesondere eine touristische Beherbergungsaktivität oder eine gastronomische Aktivität definiert und der Wohnstatus des Nutzers insbesondere einen Hauptwohnsitz oder einen Nebenwohnsitz oder eine leerstehende Unterkunft definiert.

**5.** Verfahren nach Anspruch 4, wobei der Schritt eines Berechnens einer täglichen Belegungsrate darin besteht, eine tägliche Belegungsrate für Touristenunterkünfte und eine tägliche Belegungsrate für Zweitwohnsitze zu berechnen.

**6.** Verfahren nach Anspruch 5, wobei der Schritt eines Berechnens der durchschnittlichen Belegungsrate für die touristische Beherbergung den maximalen Verbrauch der Ressource, der einem Spitzenwert der Besucherzahlen entspricht, für alle touristische Beherbergungen, die Unterbringungskapazität jeder Beherbergung und das täglich verbrauchte Volumen jeder Beherbergung berücksichtigt.

**7.** Verfahren nach Anspruch 5, wobei der Schritt eines Berechnens der durchschnittlichen Belegungsrate für Zweitwohnungen eine Anzahl von Zweitwohnungen in einem bestimmten Gebiet und eine Anzahl von Tagen, die diese Zweitwohnungen in einem bestimmten Zeitraum belegt sind, berücksichtigt.

**8.** Verfahren nach einem der Ansprüche 1 bis 7, wobei der Schritt eines Erzeugens eines Vorhersagemodells für Besucherandrang darin besteht, zusätzliche externe Daten zu berücksichtigen, die sich auf den Besucherandrang von Touristen beziehen.

**9.** Verfahren nach Anspruch 8, wobei das Vorhersagemodell für Besucherandrang ein Modell vom Typ ARMAX ist.

**10.** Verfahren nach einem der Ansprüche 1 bis 9, wobei der Schritt eines Vorhersage der Veränderung der Besucherzahlen für einen wöchentlichen oder monatlichen Zeitraum durchgeführt wird.

**11.** Verfahren nach einem der Ansprüche 1 bis 10, ferner umfassend einen Schritt zum Anzeigen der Resultate der Berechnungen auf mindestens einem Anzeigebildschirm.

**12.** Verfahren nach einem der Ansprüche 1 bis 11, wobei die verbrauchte Ressource Wasser oder Elektrizität ist.

**13.** Vorrichtung zum Vorhersagen von räumlich-zeitlichem Besucherandrang in einem Gebiet, die Vorrichtung umfassend Einrichtungen zum Durchführen der Schritte des Verfahrens nach einem der Ansprüche 1 bis 12.

**14.** Vorrichtung nach Anspruch 13, wobei die Einrichtungen zum Durchführen des Schritts nach Anspruch 11, der darin besteht, die Resultate der Berechnungen auf mindestens einem Anzeigebildschirm anzuzeigen, eine Dialog-Benutzerschnittstelle umfassen, die konfiguriert ist, um räumlich-zeitliche Skalen zu definieren, für die Belegungsraten zu berechnet werden, und um eine Analyse und Verfolgung von Vorhersagen über Besucherandrang durchzuführen.

**15.** Computerprogrammprodukt, umfassend ein Programm, das Programm umfassend Codeanweisungen, die es ermöglichen, die Schritte des Verfahrens nach einem der Ansprüche 1 bis 12 durchzuführen, wenn das Programm auf einem Computer ausgeführt wird.

**Claims**

**1.** A method for predicting spatio-temporal inflows over a territory, the method being computer-implemented and comprising the steps of:

- (202) receiving, from a plurality of smart meters in said territory, raw business data or remote meter reading values, representative of the consumption of a resource for each meter, and converting, for each smart meter, the data received into formatted information on the consumption of said resource per user, the conversion step consisting at least of: - randomly assigning a 'Data ID' data identifier to each smart meter; - calculating, for each data identifier, a differential consumption value between two meter reading indices; and - calculating a daily consumption volume value for each 'Data ID' data identifier, from the differential consumption values;

- (206) combining the daily consumption volume values with additional user identification data, in order to create categories of users of said resource, each user category defining a user profile for each user that includes at least one item of information relating to the type of activity or the housing status of the user;

- (208) selecting user profiles with the same type of activity and/or the same housing status;

- (210) calculating average occupancy rates for the selected user profiles, the calculation step consisting at least of: - defining spatial zones over said territory and identifying each zone by a 'Cell ID' cell identifier; - associating the 'Data ID' data identifiers with the 'Cell ID' cell identifiers, a given data identifier being assignable to one or more cell identifiers, and a plurality of data identifiers being assignable to a same cell identifier; and - calculating average occupancy rates for given spatial zones and given time periods;

- (212) generating, from the average occupancy rate calculations, a predictive inflow model for said territory, said model allowing for various additional inflow parameters; and

- (216) using said predictive inflow model to predict variations in inflow levels for different zones of said territory and over different time periods.

2. Method according to claim 1, wherein the raw business data comprise timestamped consumption indices and the step of converting, for each smart meter, the received data into daily consumption volumes consists at least of applying filters to eliminate, for each smart meter, aberrant remote meter reading values, the retained values corresponding to consumption indices at different time steps; resampling all of the retained consumption indices at fixed time intervals; and aggregating the data.

3. The method according to claim 1 or 2, wherein the additional user identification data comprise data on users of the smart meters and private external data and/or open data, and wherein the generated user categories comprise at least one category of professional users and one category of domestic users.

4. The method according to any one of claims 1 to 3, wherein the type of activity of the user specifically defines a tourist accommodation activity or a catering activity, and the housing status of the user specifically defines a primary residence, a secondary residence or a vacant dwelling.

5. The method according to claim 4, wherein the step of calculating a daily occupancy rate consists of calculating a daily occupancy rate for tourist accommodations and a daily occupancy rate for secondary residences.

6. The method according to claim 5, wherein the step of calculating the average occupancy rate for tourist accommodations takes into account the maximum resource consumption corresponding to a peak attendance for all tourist accommodations, the accommodation capacity of each lodging and the daily consumed volume of each lodging.

7. The method according to claim 5, wherein the step of calculating the average occupancy rate for secondary residences takes into account the number of secondary residences in a given zone and the number of days of occupation of these secondary residences over a given period.

8. The method according to any one of claims 1 to 7, wherein the step of generating a predictive inflow model consists of taking into account additional external data related to tourist attendance.

9. The method according to claim 8, wherein the predictive inflow model is an ARMAX-type model.

10. The method according to any one of claims 1 to 9, wherein the step of predicting variations in inflow levels is performed for a weekly or monthly period.

11. The method according to any one of claims 1 to 10, further comprising a step of displaying the calculation results on at least one display screen.

12. The method according to any one of claims 1 to 11, wherein the consumed resource is water or electricity.

13. A device for predicting spatio-temporal inflow levels over a territory, the device comprising means for implementing the steps of the method according to any one of claims 1 to 12.

14. The device according to claim 13, wherein the means for implementing the step of claim 11, consisting of displaying the calculation results on at least one display screen, comprise a user interface configured to define spatio-temporal scales for which to calculate occupancy rates and to perform analysis and monitoring of inflow level predictions.

15. A computer program product comprising a program, said program comprising code instructions enabling the steps of the method according to any one of claims 1 to 12 to be carried out when said program is executed on a computer.

FIG.1

FIG.2

**FIG.3**

FIG.4

**402**

| Id compteur | Date / Heure télérelève | Index |
|---|---|---|
| Y98 001 | 2016/01/01 14:05:00 | 3 000 |
| Y98 001 | 2016/01/01 15:05:00 | 3 300 |
| Y98 001 | 2016/01/01 16:05:00 | 3 320 |
| Y98 001 | 2016/01/01 17:05:00 | 3 320 |
| Y98 001 | 2016/01/01 18:05:00 | 4 500 |

**404**

| ID Data | Date / Heure télérelève | Index |
|---|---|---|
| 125 255 | 2016/01/01 14:05:00 | -- |
| 125 255 | 2016/01/01 15:05:00 | 3 300 |
| 125 255 | 2016/01/01 16:05:00 | 3 320 |
| 125 255 | 2016/01/01 17:05:00 | 3 320 |
| 125 255 | 2016/01/01 18:05:00 | 4 500 |

**406**

| ID Data | Date / Heure recalée | Consos diff. |
|---|---|---|
| 125 255 | 2016/01/01 14:00:00 | -- |
| 125 255 | 2016/01/01 15:00:00 | -- |
| 125 255 | 2016/01/01 16:00:00 | 0,02 |
| 125 255 | 2016/01/01 17:00:00 | 0 |
| 125 255 | 2016/01/01 18:00:00 | 1,18 |

**412**

| ID Data | Date | Consos Jour |
|---|---|---|
| 125 255 | 2016/01/01 | 0,360 |
| 125 255 | 2016/01/02 | 0,254 |
| 125 255 | 2016/01/03 | 0,200 |
| 125 255 | 2016/01/04 | 0,300 |
| 125 255 | 2016/01/05 | 0,299 |

**410**

| ID Data | Date / Heure recalée | Consos diff. |
|---|---|---|
| 125 255 | 2016/01/01 14:00:00 | 0,01 |
| 125 255 | 2016/01/01 15:00:00 | 0,02 |
| 125 255 | 2016/01/01 16:00:00 | 0,02 |
| 125 255 | 2016/01/01 17:00:00 | 0 |
| 125 255 | 2016/01/01 18:00:00 | 0,01 |

**408**

| ID Data | Date / Heure recalée | Consos diff. |
|---|---|---|
| 125 255 | 2016/01/01 14:00:00 | -- |
| 125 255 | 2016/01/01 15:00:00 | -- |
| 125 255 | 2016/01/01 16:00:00 | 0,02 |
| 125 255 | 2016/01/01 17:00:00 | 0 |
| 125 255 | 2016/01/01 18:00:00 | -- |

Phase A

Phase B

Phase C

Phase D

Phase D

**402**

| Id compteur | Date / Heure télérelève | Index |
|---|---|---|
| Y98 001 | 2016/01/01 14:05:00 | 3 000 |
| Y98 001 | 2016/01/01 15:05:00 | 3 300 |
| Y98 001 | 2016/01/01 16:05:00 | 3 320 |
| Y98 001 | 2016/01/01 17:05:00 | 3 320 |
| Y98 001 | 2016/01/01 18:05:00 | 4 500 |

**412**

| ID Data | Date | Consos Jour |
|---|---|---|
| 125 255 | 2016/01/01 | 0,360 |
| 125 255 | 2016/01/02 | 0,254 |
| 125 255 | 2016/01/03 | 0,200 |
| 125 255 | 2016/01/04 | 0,300 |
| 125 255 | 2016/01/05 | 0,299 |

**202**

Traitement des données de consommations

**422**

| ID Data | ID maille |
|---|---|
| 125 255 | 023 |
| 125 256 | 009 |
| 125 257 | 102 |
| 125 258 | 004 ; 005 ; 006 |
| 125 259 | 023 |

(206, 208, 210)

Calcul des taux d'occupation

**510**

| ID maille | Date | Taux d'occupation |
|---|---|---|
| 023 | 2016/01/01 | 54% |
| 023 | 2016/01/02 | 52% |
| 023 | 2016/01/03 | 49% |
| 004 ; 005 ; 006 | 2016/01/01 | 45% |
| 004 ; 005 ; 006 | 2016/01/02 | 59% |

FIG.5

**FIG.6**

**FIG.7**

**FIG.8**

**②** Mois suivant                                                            Mai 2017 📅

Baisse d'affluence touristique prévue

> réduction de plus de 2 000 personnes sur l'ensemble du territoire

Historique sur les 2 dernières années

| | |
|---|---|
| Mai 2016 | ↗ |
| Mai 2015 | ↘ |

**①** Semaine suivante                                  du 15 mai 2017 au 21 mai 2017

Augmentation d'affluence touristique prévue

> augmentation de plus de 2 000 personnes sur l'ensemble du territoire

Historique sur les 2 dernières années

| | |
|---|---|
| du 14 mai 2016 au 20 mai 2016 | ↗ |
| du 15 mai 2015 au 21 mai 2015 | ↗ |

## FIG.9

24

**EP 3 711 013 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2015072357 A
- FR 2827689
- CN 103020732
- EP 1723591 A
- EP 2535843 A
- EP 2766695 A